# FASCICULE DE BREVET EUROPEEN

(11) **EP 0 520 018 B1**
(45) Date de publication et mention de la délivrance du brevet: **01.02.1995**
(21) Numéro de dépôt: 91906789.2
(22) Date de dépôt: 14.03.1991
(51) Int. Cl.: D06M 23/06, B01J 8/46, B05C 19/02, B05D 1/24

(54) **PROCEDE D'IMPREGNATION DE FIBRES A L'AIDE DE POUDRES DE POLYMERES ET D'UN LIT FLUIDISE, ET DISPOSITIF POUR SA MISE EN OEUVRE**
WIRBELBETTVERFAHREN ZUM IMPRÄGNIEREN VON FASERN MIT POLYMER-PULVERN UND VORRICHTUNG DAFÜR
PROCESS FOR IMPREGNATING FIBRES WITH POLYMER POWDERS USING A FLUIDISED BED AND DEVICE FOR CARRYING OUT SAID PROCESS

(30) Priorité: 15.03.1990 FR 9003346
(43) Date de publication de la demande: 30.12.1992
(73) Titulaire: SOCIETE NATIONALE DES POUDRES ET EXPLOSIFS, F-75181 Paris Cédex 04 (FR)
(72) Inventeur: CHARLES, Alain, F-94500 Champigny-sur-Marne (FR); MOREL, Emile, F-75012 Paris (FR)
(74) Mandataire: Santarelli, Marc
(86) Numéro de dépôt international: FR9100207
(87) Numéro de publication internationale: WO9114044

(56) Documents cités:
- EP-A- 0 246 167
- WO-A-87/00563
- DE-A- 1 444 082
- DE-A- 3 525 404
- FR-A- 1 530 155
- FR-A- 2 031 719
- US-A- 2 478 939
- US-A- 4 008 685

## Description

La présente invention concerne un procédé en continu d'imprégnation de fibres et son dispositif de mise en oeuvre.

On sait déjà imprégner en continu des fibres par différentes techniques telles que :
- passage de la fibre dans le polymère à l'état fondu ;
- passage de la fibre dans une solution ou une suspension liquide contenant le polymère ;
- passage de la fibre dans une suspension du polymère en poudre dans un gaz.

De telles opérations sont alors suivies d'un traitement thermique amenant le polymère dans un état permettant la pénétration de ce dernier au sein de la fibre et les opérations de façonnage telles que le moulage.

Or, les deux premières techniques présentent au moins l'un des inconvénients suivants, en particulier lorsque le polymère est thermoplastique :
- gainage irrégulier et non homogène de la fibre conduisant ultérieurement, lors du traitement thermique, à une imprégnation irrégulière et non homogène et, par conséquent, à des propriétés médiocres surtout au vieillissement ;
- nécessité de l'élimination du liquide ayant servi à la mise en solution ou en suspension du polymère, cette élimination ne pouvant se faire qu'avec des dispositifs de chauffe appropriés associés aussi éventuellement à des dispositifs de récupération, voire de recyclage ;
- difficulté de se débarrasser des traces résiduelles de liquide et formation de pores qui sont nuisibles à une bonne adhérence entre fibres et matrice polymérique et donc à de bonnes propriétés mécaniques ;
- contrôle délicat du rapport des poids ou des volumes respectifs de polymères et de fibres. Or un tel contrôle est déterminant dans la maîtrise d'un procédé d'imprégnation de fibres en continu.

La technique d'imprégnation par passage de la fibre dans une suspension de polymères en poudres dans un gaz doit être séparée en deux catégories selon la nature de la suspension :
- aérosols,
- lits fluidisés.

Ces deux formes de suspensions où des particules ou des microparticules de poudre se trouvent momentanément dispersées dans un continuum gazeux possèdent des caractéristiques propres. Entre autres, le lit fluidisé présente une surface supérieure horizontale comme un liquide dans un récipient. La concentration d'un lit fluidisé par rapport au volume qu'il occupe n'a pas de sens comme pour un liquide, contrairement à un aérosol.

L'imprégnation de fibres en lit fluidisé présente les mêmes inconvénients quant au contrôle du rapport pondéral ou volumique de polymère emporté par les fibres que l'imprégnation en suspension liquide. Ce rapport étant fonction séparément ou simultanément ;
- de la durée d'immersion dans la solution, la suspension liquide ou le lit fluidisé ;
- de la concentration de la solution ou de la suspension liquide ;
- de l'efficacité du dispositif utilisé pour l'élimination de l'excès de polymère emporté.

Lorsqu'il faut faire varier la durée d'immersion, c'est, en général :
- la géométrie de la trajectoire de la fibre dans le milieu d'imprégnation qui doit être modifiée si l'on ne change pas sa vitesse de passage. Le maintien constant du rapport dépend de l'homogénéité et de la concentration en polymères du milieu d'imprégnation et du maintien de celles-ci. La création d'un lit fluidisé est théoriquement possible avec toutes les poudres, mais se heurte à des difficultés pratiques;
- certains polymères en poudre très fine et mottants comme les résines phénoliques novolaques se fluidisent très mal ;
- les polymères en poudre qui ont subi un traitement par un liquide ou sont additionnés de quelques pourcents de liquide (ce qui est d'usage courant avec les thermodurcissables en poudre) ne peuvent être fluidisés ou mis en suspension liquide ou en solution.

En revanche, ces poudres difficiles à fluidiser peuvent être mises en suspension aérosol solide sans modification de la formulation ou de la granulométrie initiale.

FR-A-2 031 719 décrit un procédé et dispositif pour l'obtention de produits composés de fibres agglomérées par des résines synthétiques mettant en oeuvre une cuve en matière isolante dont le fond est pourvu d'une plaque poreuse, la résine en poudre amenée dans ladite cuve formant au-dessus de la plaque poreuse un lit fluidisé sous l'action combinée d'un champ électrostatique et d'une pression d'air s'exerçant sous ladite plaque, laquelle est pourvue de points reliés à un pôle d'un générateur électrostatique, l'autre pôle de ce dernier étant relié aux libres avant leur entrée dans la cuve. Les fibres sont imprégnées dans une zône au-dessus du lit fluidisé.

EP-A-0 246 167 décrit un procédé et installation d'imprégnation en continu de libres utilisant une enceinte comportant les moyens d'admission d'une suspension du type aérosol de polymères à partir d'un générateur d'aérosol alimenté en air comprimé (mais qui n'est pas un lit fluidisé) et un moyen de circulation des fibres dans cette enceinte, et des moyens pour collecter les particules ou microparticules en excès et les recycler soit aux moyens d'admission de ces dernières, soit directement à l'enceinte. Un étalonnage n'est pas nécessaire, les fibres emportent autant de polymère que l'enceinte en reçoit.

WO-A-87/00563 décrit un procédé et installation pour le traitement de fibres dans lequel l'agent de traitement est suspendu dans un courant gazeux mettant en oeuvre par exemple un lit fluidisé sous pression contrôlée.

US-A-4 008 685 décrit une chambre d'imprégnation de fibres comprise entre deux enceintes à vide munies de moyens de réglage de la ventilation dans laquelle l'air servant à charger les particules formant l'aérosol est chargé électrostatiquement.

La plupart des procédés connus utilisant une suspension aérosol comme milieu d'imprégnation proposent des dispositifs de réglage de la concentration qui permettent ainsi d'agir sur la quantité de polymère emportée par la fibre. Tous ces procédés exigent un étalonnage qui relie la concentration globale dans l'enceinte d'imprégnation de la suspension aérosol et le rapport polymère emporté-fibres. Cet étalonnage doit être refait à chaque changement de type de fibres ou de polymère et selon les conditions de capture. Parmi ces procédés d'imprégnation en milieu aérosol qui exigent cet étalonnage, il faut citer ceux qui génèrent la suspension aérosol solide par aspiration dans un lit fluidisé bien distinct du milieu d'imprégnation. Le recyclage de la partie d'aérosol solide non captée vers le lit fluidisé n'exclut pas la nécessité de l'étalonnage.

Il serait donc souhaitable de disposer d'un nouveau procédé d'imprégnation de fibres à l'aide de poudres polymériques sous forme d'aerosol, l'aérosol étant généré par un lit fluidisé, le procédé ne nécessitant pas en particulier d'étalonnage et permettant une imprégnation très régulière. De plus, il serait souhaitable que cette imprégnation puisse se faire à une vitesse élevée et à un coût très limité.

C'est pourquoi la présente demande a pour objet un procédé en continu d'imprégnation de fibres de grande longueur se présentant sous la forme de fils, filaments, mèches ou rubans à l'aide de poudres de polymères, dans lequel l'on fait circuler lesdites fibres dans un aérosol solide généré par un lit fluidisé, caractérisé en ce que l'on alimente ledit aérosol solide en un débit de nouvelles particules de poudre de polymère égal à celui dont on désire imprégner les fibres par unité de temps, en ce que la totalité des particules de poudre de polymère préalablement introduites mais non imprégnées sur les fibres sont en permanence réintroduites dans le lit fluidisé constitué de particules de nature différente de celle du polymère sans modification du débit d'alimentation en nouvelles particules de poudre, et en ce que le pot de fluidisation, relié à la terre, et les particules constituant le lit fluidisé sont de nature à charger électrostatiquement les particules de poudres polymériques.

Ces fibres, puisqu'il s'agit d'un procédé en continu, seront généralement de grande longueur et se présenteront habituellement sous forme de fils, filaments, mèches ou de rubans.

Les polymères utilisés pourront être de toutes sortes, par exemple du type thermodurcissables ou thermoplastiques. Ils se présenteront sous forme de poudres. La granulométrie des poudres pourra aller par exemple jusqu'à 350 »m mais sera de préférence inférieure à 250 »m.

Les fibres à imprégner pourront être également de toutes natures, mais étant donné que l'imprégnation des fibres sera généralement destinée à les renforcer, lesdites fibres seront elles-mêmes de préférence d'une grande résistance telles que des fibres de verre, de carbone ou d'aramide, comme le Kevlar.

L'aérosol dans lequel circuleront ces fibres sera généré dans une enceinte dans laquelle circuleront lesdites fibres. Cette enceinte pourra être de type ouvert ou fermé selon l'appareillage utilisé, comme on le verra ci-après.

Un aérosol solide est l'équivalent d'une vapeur pour le liquide correspondant, à savoir qu'un aérosol occupe le volume que l'on met à sa disposition. Il est donc habituellement défini par sa concentration en particules solides.

Les particules de polymères selon l'invention pourront avoir une forme d'aiguilles mais de préférence une forme sphérique ou proche d'une sphère. Dans le cas d'une forme sphérique ou quasi sphérique, leur diamètre, comme indiqué ci-dessus, sera de préférence inférieur à 250 »m.

Selon une des caractéristiques de la présente invention, ledit aérosol solide est généré par un lit fluidisé particulier.

Un lit fluidisé comprend classiquement un pot de fluidisation, une membrane perméable à l'air et un générateur d'air.

Le lit fluidisé se comporte comme un liquide et est donc caractérisé en particulier par une surface supérieure horizontale.

Le pot renfermant les particules constituant le lit fluidisé pourra être de toute forme, par exemple parallélépipédique mais de préférence cylindrique comportant à sa partie inférieure une membrane perméable à l'air perforée ou poreuse, ainsi qu'un générateur d'air comprimé de toute nature (boîte à vent).

Ce lit fluidisé pourra également comprendre un capteur de pression dans le pot, de préférence un capteur de pression statique, éventuellement relié à un enregistreur.

Les particules constituant le lit fluidisé pourront avoir toute forme, telle que de grains ou de baguettes, mais de préférence de sphères. Leur taille dépendra de la granulométrie et de la densité de la poudre. Par exemple, dans le cas de billes de verre, celles-ci pourront avoir un diamètre de 100 à 200 »m, pour une poudre de polyamide 6 de diamètre moyen inférieur à 20 »m. Les billes de verre constituant le lit fluidisé pourront avoir par exemple de 800 à 1000 »m pour des polyméres de granulométrie inférieure à 250 »m ; on pourra utiliser des billes de 2 mm de diamètre pour des poudres denses.

La charge des billes dans le pot sera par exemple de 1400 g de billes de verre de 800 à 1000 »m de diamètre pour un pot cylindrique de diamètre d'environ 100 mm et pour un débit d'air de fluidisation de 300 à 800 l/minute.

Selon une des caractéristiques essentielles de la présente invention, le pot de fluidisation est relié à la terre.

La nature du pot de fluidisation ainsi que la nature des particules constituant le lit fluidisé ont une influence sensible sur la qualité de l'imprégnation. Des résultats particulièrement intéressants sont obtenus par utilisation d'un pot en laiton et de billes de verre.
L'aérosol solide ainsi obtenu a une forte charge négative. C'est pourquoi lors de leur défilement, les fibres seront avantageusement chargées positivement dans un tel cas.

De manière générale, on chargera les fibres selon une polarité contraire de celles de l'aérosol solide selon des méthodes connues en elles-mêmes.

Le procédé selon la présente invention est un procédé en continu, il y a donc trois phases à distinguer : la phase de montée en régime, la phase d'opérations en continu et la phase d'arrêt.

Lors de la phase de montée en régime, l'imprégnation est irrégulière ; au bout d'un certain temps, un équilibre est atteint et pendant toute cette phase, il n'est plus besoin de modifier en quoi que ce soit les paramètres de fonctionnement du procédé ci-dessus décrit.

Selon une caractéristique de la présente invention, l'on alimente ledit aérosol solide en un débit de nouvelles particules de poudre égal à celui dont on désire imprégner les fibres par unité de temps. Par exemple, pour une circulation des fibres de 1 m/minute, si l'on veut une imprégnation d'un gramme par mètre, on apportera, par l'intermédiaire du lit fluidisé, une quantité de nouvelles particules de poudre égale à 1 g/minute. Cette délivrance de la poudre neuve de polymère pourra se faire par tout moyen approprié, par exemple une balance doseuse couplée à un injecteur pneumatique.

Selon une autre caractéristique du procédé ci-dessus décrit, la totalité des particules de poudre introduites mais non imprégnées sur les fibres sont en permanence réintroduites dans le lit fluidisé, cette opération étant réalisée sans modification du débit d'alimentation en de nouvelles particules de poudre. Cette introduction pourra se faire par tous dispositifs connus, par exemple ceux utilisés pour le recyclage, étant entendu que la réintroduction du polymère non fixé n'influe en rien sur l'alimentation en polymère neuf.

L'enceinte dans laquelle est généré l'aérosol solide et dans laquelle circulent les fibres pourra avoir toutes formes, dimensions et dispositions appropriées. Cette enceinte sera en communication avec un générateur d'aérosol à lit fluidisé et, comme déjà indiqué, l'aérosol solide occupera la totalité du volume mis à sa disposition.

L'enceinte pourra être ouverte ou fermée et disposée tant horizontalement que verticalement. On pourra de préférence disposer une enceinte horizontale notamment modulaire de manière à pouvoir en régler la longueur, ouverte et surmontée d'un élutriateur. Au niveau de l'élutriateur, "l'aérosol" perd sa qualité d'aérosol solide et les particules non fixées sédimentent et retombent dans le lit fluidisé ou elles sont à nouveau régénérées sous forme d'aérosol solide, réintroduisant ainsi les particules de polymère non imprégnées en permanence dans le lit fluidisé.

Dans un tel cas, la réintroduction des fibres non imprégnées dans le lit fluidisé ne nécessite pas d'autre appareillage que l'élutriateur. On pourra tout aussi bien utiliser une enceinte fermée à l'exception des orifices de passage des fibres, disposée horizontalement et en communication avec l'aérosol solide.

On pourra dans ce cas, par exemple, utiliser un dispositif de type vis sans fin pour récupérer à la base de l'enceinte, dont la partie inférieure aura avantageusement une section en V, et réintroduire dans le lit fluidisé, les particules de poudre non imprégnées.

Dans des conditions préférentielles de mise en oeuvre du procédé ci-dessus décrit, on utilise une enceinte verticale comportant à son extrémité supérieure un élutriateur et qui comporte de plus une paroi qui sépare en deux ladite enceinte, paroi s'étendant par exemple du niveau de l'élutriateur jusqu'à proximité, par exemple 20 ou 50 cm, de la surface du lit fluidisé.

Dans un tel cas, on pourra par exemple faire circuler les fibres dans les deux moitiés de l'enceinte ainsi constituée.

Un tel procédé permet une imprégnation en continu, régulière, à une vitesse de défilement pouvant atteindre 100 m/minute. Il est particulièrement peu coûteux et, de ce fait, les économies réalisables sur le temps, le coût et les retours de produits non conformes sont importantes.

Un dispositif avantageux selon la présente invention comportera une boîte à vent alimentée sous pression en air de fluidisation, éventuellement réglée par un débitmètre, par exemple à diaphragme, surmontée d'une paroi poreuse de section circulaire, elle-même surmontée d'un pot vertical circulaire sensiblement de même diamètre, de préférence en laiton relié à la terre, rempli de particules constituant le lit fluidisé, par exemple de billes de verre, ce pot comportant si désiré des parois poreuses, un capteur de pression statique ainsi que, vers le milieu de la hauteur du lit, un dispositif d'injection de la poudre d'imprégnation, ledit pot à lit fluidisé étant lui-même surmonté, toujours verticalement, d'un cylindre allongé se terminant par un entonnoir (élutriateur) s'évasant vers le haut, séparé en deux parties par une paroi transversale, dans le sens de sa longueur. Cette paroi sera à une distance prédéterminée de la surface du lit fluidisé. Ce dispositif comporte également des moyens de renvoi permettant la circulation des fibres, de manière que celles-ci, arrivant par l'entonnoir, descendent dans l'enceinte d'imprégnation, à l'aide d'un ou deux renvois, passent sous la paroi de séparation puis remontent par l'autre moitié d'enceinte et sont évacuées également par l'entonnoir.

La présente demande a également pour objet un dispositif spécialement conçu pour la mise en oeuvre du procédé ci-dessus décrit, comportant une boîte à vent surmontée d'une membrane poreuse sensiblement horizontale et perméable à l'air servant de base à un pot de fluidisation contenant les particules destinées à constituer le lit fluidisé, ledit pot étant en communication avec une enceinte comportant des moyens de circulation des fibres caractérisé en ce que l'enceinte comporte des moyens de réintroduction des particules non imprégnées dans le lit fluidisé, et en ce que le pot de fluidisation, relié à la terre, et les particules destinées à constituer le lit fluidisé sont de nature à charger électrostatiquement les particules de poudre polymérique.

On pourra aussi utiliser des dispositifs semblable à ceux décrits dans EP-A-0 246 167.

Dans des conditions préférentielles, le dispositif ci-dessus décrit comporte un pot de fluidisation en laiton et les particules constituant le lit fluidisé sont en verre. La disposition de l'enceinte d'imprégnation peut être horizontale mais de préférence, verticale ; dans ce dernier cas, l'enceinte aura avantageusement une forme cylindrique et sera surmontée d'un élutriateur, notamment en forme d'entonnoir. Ladite enceinte pourra avantageusement être séparée en deux parties sensiblement égales par l'intermédiaire d'une cloison, elle aussi verticale.

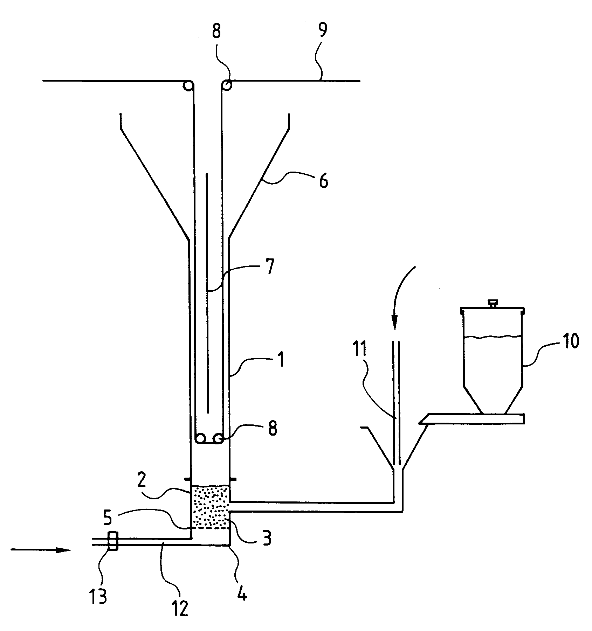

L'invention sera mieux comprise si l'on se réfère au dessin annexé qui schématise un dispositif de mise en oeuvre du procédé selon la présente invention, comportant une enceinte verticale d'imprégnation.

Sur cette figure, on distingue l'enceinte 1 d'imprégnation disposée verticalement reliée au pot 2 de fluidisation, également vertical et relié à la terre, comportant les particules constituant le lit fluidisé 3, mises en mouvement grâce à l'air injecté dans la boîte à vent 4 et passant au travers des orifices de la paroi poreuse 5 pour générer un aérosol solide montant jusqu'en haut de l'enceinte 1 surmontée par un élutriateur 6 en forme d'entonnoir dirigé vers le bas.

L'enceinte 1 est séparée en deux parties sensiblement égales par une cloison verticale 7.

On distingue également les moyens de renvoi 8 permettant la circulation des fibres 9. On a schématisé également l'alimentation en poudre de polymères, ici à l'aide d'une balance doseuse 10, fournissant un débit constant de poudre égal au débit de poudre emportée par les fibres. Cette poudre est ici transportée au sein du lit fluidisé grâce à de l'air comprimé 11. De l'air comprimé 12 est également injecté dans la boîte à vent 4 et réglé par un débitmètre 13 par exemple de type à diaphragme.

Les dispositifs annexes tels que dévidoirs de mèches, dispositifs de réglage de tension des fibres, fours à infrarouges, laminoirs, refroidisseurs, conteneurs, bien connus de l'état de la technique et de l'homme de l'art, n'ont pas été représentés.

## Revendications

1. Procédé en continu d'imprégnation de fibres (9) de grande longueur se présentant sous la forme de fils, filaments, mèches ou rubans à l'aide de poudres de polymères, dans lequel l'on fait circuler lesdites fibres dans un aérosol solide généré par un lit fluidisé (3), caractérisé en ce que l'on alimente ledit aérosol solide en un débit de nouvelles particules de poudre de polymère égal à celui dont on désire imprégner les fibres par unité de temps, en ce que la totalité des particules de poudre de polymère préalablement introduites mais non imprégnées sur les fibres sont en permanence réintroduites dans le lit fluidisé constitué de particules de nature différente de celle du polymère sans modification du débit d'alimentation en nouvelles particules de poudre, et en ce que le pot (2) de fluidisation, relié à la terre, et les particules constituant le lit fluidisé (3) sont de nature à charger électrostatiquement les particules de poudres polymériques.

2. Procédé d'imprégnation en continu de fibres (9) à l'aide de poudres de polymères selon la revendication 1, caractérisé en ce que le pot (2) de fluidisation est en laiton et que le lit fluidisé (3) est formé de billes de verre.

3. Dispositif spécialement conçu pour la mise en oeuvre du procédé selon la revendication 1 comportant une boîte à vent (4) surmontée d'une membrane poreuse sensiblement horizontale et perméable à l'air servant de base à un pot (2) de fluidisation contenant les particules destinées à constituer le lit fluidisé (3), ledit pot étant en communication avec une enceinte (1) comportant des moyens (8) de circulation des libres (9) caractérisé en ce que l'enceinte comporte des moyens de réintroduction des particules polymériques non imprégnées dans le lit fluidisé, et en ce que le pot (2) de fluidisation, relié à la terre, et les particules destinées à constituer le lit fluidisé (3) sont de nature à charger électrostatiquement les particules de poudres polymériques.

4. Dispositif selon la revendication 3, caractérisé en ce que le pot (2) de fluidisation est en laiton et que les particules destinées à constituer le lit fluidisé (3) sont en verre.

5. Dispositif selon la revendication 3 ou 4, caractérisé en ce que l'enceinte (1) est une enceinte verticale.

## Claims

1. Continuous process for impregnating long fibres (9) appearing in the form of threads, filaments, yarns or ribbons, using polymer powders, in which the said fibres are circulated in a solid aerosol generated by a fluidized bed (3), characterized in that the said solid aerosol is provided with a supply of new polymer powder particles equal to that with which it is desired to impregnate the fibres per unit time, in that all of the polymer powder particles previously introduced but not impregnated into the fibres are continuously reintroduced into the fluidized bed constituted by particles of a different nature to that of the polymer, without modification of the supply flow rate of new powder particles, and in that the earthed fluidization vessel (2) and the particles constituting the fluidized bed (3) are such as to electrostatically charge the polymer powder particles.

2. Continuous process for impregnating fibres (9) using polymer powders according to claim 1, characterized in that the fluidization vessel (2) is brass and that the fluidized bed (3) is formed by glass beads.

3. Specially designed device for implementing the process according to claim 1 comprising an air chamber (4) surmounted by an approximately horizontal porous membrane which is air-permeable serving as a base for a fluidization vessel (2) containing the particles intended to constitute the fluidized bed (3), the said vessel being in communication with a chamber (1) comprising circulation means (8) for the fibres (9) characterized in that the chamber comprises means for reintroducing the non-impregnated polymer particles into the fluidized bed, and in that the earthed fluidization vessel (2) and the particles intended to constitute the fluidized bed (3) are such as to electrostatically charge the polymer powder particles.

4. Device according to claim 3, characterized in that the fluidization vessel (2) is brass and that the particles intended to constitute the fluidized bed (3) are of glass.

5. Device according to claim 3 or 4, characterized in that the chamber (1) is a vertical chamber.

## Patentansprüche

1. Kontinuierliches Imprägnierverfahren für Fasern (9) großer Länge, die in Form von Fäden, Filamenten, Stapelfasern oder Bändern vorliegen, mit Polymerpulvern, bei dem man die Fasern in einem durch ein Wirbelbett (3) erzeugten Feststoffaerosol verwirbeln läßt, **dadurch gekennzeichnet,** daß man das Feststoffaerosol mit einem Strom neuer Pulverteilchen des Polymers speist, der dem entspricht, mit dem man die Fasern pro Zeiteinheit imprägnieren möchte, daß die Gesamtheit der Pulverteilchen des Polymers, die vorher eingeführt, mit denen die Fasern aber nicht imprägniert wurden, kontinuierlich in das Wirbelbett, das aus von den Polymeren unterschiedlichen Teilchen zusammengesetzt ist, zurückgeführt werden, ohne den Speisestrom an neuen pulverförmigen Teilchen zu verändern und dadurch, daß das geerdete Wirbelgefäß (2) und die Teilchen, aus denen das Wirbelbett (3) besteht, so beschaffen sind, daß sie die Teilchen des Polymerpulvers elektrostatisch aufladen.

2. Kontinuierliches Imprägnierverfahren für Fasern (9) mit Polymerpulvern gemäß Anspruch 1, dadurch gekennzeichnet, daß das Wirbelgefäß (2) aus Messing besteht und daß das Wirbelbett (3) durch Glaskugeln gebildet wird.

3. Vorrichtung, die eigens für die Durchführung des Verfahrens gemäß Anspruch 1 entwickelt wurde, die einen Windkasten (4) aufweist, über dem sich eine im wesentlichen horizontale und luftdurchlässige poröse Membran befindet, die als Boden eines Wirbelgefäßes (2) dient, das die Teilchen, aus denen das Wirbelbett bestehen soll enthält, wobei das Gefäß mit einer Umhüllung (1) in Verbindung steht, die Mittel (8) zum Verwirbeln der Fasern (9) umfaßt, dadurch gekennzeichnet, daß die Umhüllung Mittel zur Wiedereinführung der nicht zur Imprägnierung verwendeten Polymerteilchen in das Wirbelbett umfaßt und dadurch, daß das geerdete Wirbelgefäß (2) und die Teilchen, aus denen das Wirbelbett (3) bestehen soll, eine Beschaffenheit aufweisen, daß die pulvenförmigen Polymerteilchen elektrostatisch aufgeladen werden.

4. Vorrichtung nach Anspruch 3, dadurch gekennzeichnet, daß das Wirbelgefäß (2) aus Messing besteht und daß die Teilchen, aus denen das Wirbelbett bestehen soll, aus Glas sind.

5. Vorrichtung nach Anspruch 3 oder 4, dadurch gekennzeichnet, daß die Umhüllung (1) eine Vertikalumhüllung ist.
